# EUROPEAN PATENT SPECIFICATION

(11) **EP 0 627 986 B1**
(45) Date of publication and mention of the grant of the patent: **30.09.1998**
(21) Application number: 92909743.4
(22) Date of filing: 28.02.1992
(51) Int. Cl.: B32B 3/10

(54) **BICOMPONENT ELASTOMERIC NETTING**
ELASTISCHES NETZ AUS ZWEI KOMPONENTEN
FILET ELASTOMERE A DEUX CONSTITUANTS

(43) Date of publication of application: 14.12.1994
(73) Proprietor: LEUCADIA INC, New York, NY 10010 (US)
(72) Inventor: CEDARBLAD, Hans, O., Minnetonka, MN 55343 (US); SEPPALA, Jan, D., Woodbury, MN 55125 (US)
(74) Representative: Enskat, Michael Antony Frank
(86) International application number: US9201663
(87) International publication number: WO9316870

(56) References cited:
- EP-A- 0 046 402
- DE-A- 1 504 629
- NL-A- 7 706 855
- US-A- 3 723 218
- US-A- 4 636 419

## Description

### Background Of the Invention

### 1. Field Of The Invention

This invention relates to plastic netting, and more particularly to an extruded bicomponent elastomeric netting having unidirectional elasticity, that is in either the machine direction or the transverse direction.

### 2. Description Of The Related Art

For purposes of the present invention, the terms "cross machine direction" and "transverse direction" are synonymous and sometimes simply referred to as "TD", as are the terms "longitudinal direction" and "machine direction", sometimes simply referred to as "MD". However, the term "transverse" is sometimes also used to refer to strands which extend in a direction opposite to that of strands previously referred to. The meaning will be clear from the context in any particular instance. Current production elastomeric roll goods, such as scrims, sheets, films, foams, nettings, nonwovens, fibers, threads and the like are basically isotropic, exhibiting essentially the same properties in all directions of their two dimensional plane. However, in many applications, elastomeric properties are desired in only one direction, while elastomeric properties in the other direction are unnecessary or even detrimental to product functionality. Although numerous patents exist describing netting, woven and non-woven fabrics, meshes and chain nets with bicomponent materials or unidirectional elasticity or netlike articles, they do not provide any suggestion to modify the prior art such as is done in the present invention with respect to extruded plastic net. Existing technology does not include an extruded bicomponent elastomeric netting with unidirectional elasticity which may be manufactured more economically than most conventional elastomeric netting on the market.

Nets, wovens and nonwoven reinforcements made of more than one material are disclosed in U.S. Patent No. 4,636,419 to Madsen, U.S. Patent No. 4,241,123 to Shih, and U.S. Patent No. 4,460,633 to Kobayashi et al. In addition, a netting die fed by two separate polymer streams is disclosed in U.S. Patent No. 3,791,784 to Arechavaleta.

U.S. Patent No. 4,636,419 issued to Madsen et al on January 13, 1987 discloses a "Net and Method of Producing Same" which employs a combination of side by side extrusion streams, transversal embossment, and splitting to produce netting composed of a regular array of longitudinal ribbon-formed continuous polymer filaments and a regular array of transverse stems or strands of a different polymer material. It is disclosed that the use of two different polymer substances in two directions affords netting of interesting and unusual properties (Col. 2, Lns 12-25 and 30-31). In Example One, the cross machine component comprises Nylon 6 and the machine direction component comprises polypropylene (col. 11, Ins 13-31). It is disclosed that elastomeric netting may be prepared by the method of this patent, and preferred materials as well as a suitable application for such netting is disclosed (col. 9, In, 67 through col. 10, In. 7). Unidirectional elasticity in net as-extruded is neither disclosed nor suggested.

US Patent No 4,241,123 issued to Shih on December 23, 1980 discloses non-woven netting wherein a first group of melting monofilaments are die extruded and a second group of monofilaments or a yarn is crossed, pressed, and welded to form a welded plastic netting (Col. 3, Ins. 8-12). Unidirectional elasticity is not disclosed.

US Patent No 4,460,633 issued to Kobayashi et al. on July 17, 1984 discloses a non-woven reinforcement for resinous composites made of bundles of non-twist or soft twist yarns as warps on both sides of bundles of non-twist or soft twist yarns as wefts, warps and wefts being bonded by an adhesive agent impregnated into the wefts. This invention differs from the present invention in that it does not suggest unidirectional elasticity, having flexure no different from that of a woven fabric.

US Patent No 4,980,227 issued to Sekiguchi et al. on December 25, 1990 discloses a stiff, netlike sheet of heat bonded five layer and three layer polyolefin yarns which exhibits retention of its sheet-like shape due to its stiffness. Although heat bonding of polyolefin materials is mentioned, neither an extruded net nor the use of another material to produce unidirectional elasticity is disclosed or suggested.

US Patent NO 3,791,784 to Arechavaleta discloses an extrusion die fed by two separate polymer streams. Although Arechavaleta suggests that two different materials may be extruded, it is not suggested that the die be used to produce a resulting netting structure which will possess good strand to strand bond, uniform transverse direction strand spacing, or a high transverse direction packing density, i.e. transverse direction strandcount, nor is a net having unidirectional elasticity suggested. In particular it is not suggested that netting strands made of two basically incompatible resin groups, such as polyolefins and styrenic block copolymers, can provide a good bond with the associated desirable properties. Differences in polymer compatibility, rheology, processing melt history, melt temperatures and the like contribute to the expectation of a poor strand to strand bond as compared to a situation in which one polymer component is used for the two melt streams.

Fabrics, meshes, chain nets, and support materials with elastic properties are disclosed in U.S. Patent No. 4,107,371 issued to Dean, U.S. Patent No. 4,673,015 issued to Andreasson, U.S. Patent No. 4,728,565 issued to Fontana, U.S. Patent No. 4,469,739 issued to Gretzinger, and U.S. Patent No. 4,351,872 issued to Brosseau et al. These products are expensive to produce, and are significantly different from a netting product.

U.S. Patent No. 4,107,371 issued to Dean on August 15, 1978 discloses a fabric woven of plastic-coated yarn and polymer strands that is relatively stiff in one direction and relatively flexible in the other direction. This differs from the present invention in that it does not disclose, teach or suggest making an extruded net from two different polymers.

U.S. Patent No. 4,351,872 issued to Brosseau et al. on September 28, 1982 discloses a unidirectional stretch mesh laminate used in an orthopaedic traction harness. A commercially available DuPont unidirectional stretch mesh is discussed at col. 3, Ins. 12-18 as a component of the invention. No patent was found disclosing said mesh.

U.S. Patent No. 4,469,739 issued to Gretzinger on September 4, 1984 discloses an oriented woven furniture support material made in part from an elastomer monofilament and in part from synthetic or natural yarn. Unlike the extruded bicomponent elastomeric netting of the present invention, this material is woven, and is not completely plastic in composition.

U.S. Patent No. 4,673,015 issued to Andreasson on June 16, 1987 discloses a chain net which may include links of elastically deformable material. It is suggested that although warp and weft strands are usually made of links of similarly elastic material, the weft strands may alternatively be made of other material (col. 2, Ins. 49-64). Although unidirectional elasticity is suggested, this patent does not disclose an extruded net.

US Patent No. 4,728,565 issued to Fontana on March 1, 1988 discloses an elastic support member for supporting stuffing of furniture pieces comprising an elastic net or belt formed of a net or honeycomb fabric or a woven fabric comprised of rubber threads arranged in at least one of the transverse and longitudinal directions. This patent is an improvement of Italian Patent No. 955,134. Although the appearance of rubber threads in at least one direction suggests unidirectional elasticity, this patent neither discloses nor suggests an extruded net as in the presently disclosed invention.

Further relevant prior art is to be found in DE-A-1504629, US-A-4062995, EP-A-0046402 and and USA 3723218. The latter document discloses a method of producing net and net-like products from molten polymer using an apparatus having at least two die members, one for the extrusion of strands of polymer, the other to feed strands of molten polymer over the extruded strands to form the product.

The art described in this section is not intended to constitute an admission that any patent, publication or other information referred to herein is "prior art" with respect to this invention, unless specifically designated as such. In addition, this section should not be construed to mean that a search has been made or that no other pertinent information as defined in 37 C.F.R. §1.56(a) exists.

### Summary of the Invention

The present invention is an extruded bicomponent elastomeric netting as defined in claim 1. It is economical to produce. The bicomponent netting of the present invention may be produced by an extrusion die fed by two separate polymer streams. Such a netting is a non-woven employing a relatively non-elastic strand material in one direction and a relatively elastic transverse strand material in the opposite direction. The strands of the two resin streams should show good joint bond strength. The net comprises a non-elastic material comprising essentially a polyolefin in the machine direction and an elastic material comprising essentially an elastic styrenic block copolymer in the cross machine direction. A product with reverse strand distribution may also be produced, with the elastic material in the machine direction and the non-elastic material in the cross machine direction. It was unexpectedly found that polyolefins and styrenic block copolymers, two basically incompatible polymers, possess good bond strength. A preferred embodiment of the invention employs an elastic material of a styrenic block copolymer resin such as is commercially available under the Kraton® brand from Shell Oil Company, Houston, TX or the Vector brand which is available from Dexco Polymers, a Dow/Exxon partnership, of Plaquemine, LA. The non-elastic strands are preferably in the machine direction in this preferred embodiment and may be oriented. Of course, the opposite arrangement of strands may be used according to this invention.

### Brief Description Of The Drawings

Fig. 1 is a perspective view of the netting of the present invention.

Fig. 2 is a the netting of Fig. 1 shown with the elastic strands stretched.

Fig. 3 is a cross sectional view taken through the vertical axis of an extrusion die for making the netting of the present invention.

### Description Of The Preferred Embodiments

While this invention may be embodied in many different forms, there are shown in the drawings and described in detail herein specific preferred embodiments of the invention.

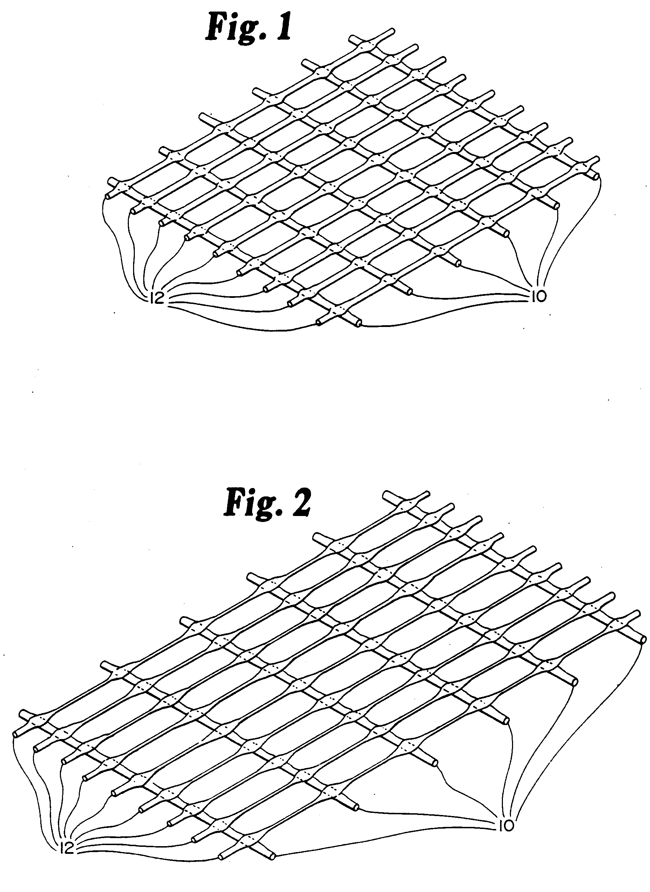

Referring now to FIG. 1, The bicomponent elastomeric netting shown is extruded and may consist of strands of a relatively non-elastic material **10** extending in one direction and strands **12** of a relatively elastic material extending in a crosswise or transverse direction. The strands are extruded polymeric elongate members which cross and intersect during extrusion to form the net-like structure. In one preferred embodiment, the non-elastic material is polypropylene and the elastic material is the commercially available Kraton® D grade class resin such as D-1122 or D-2104 from Shell Oil Company, Houston, Texas.

However, in its broad context, the elastic material comprises essentially an elastic styrenic block copolymer and the non-elastic strand material comprises essentially a polyolefin.

For the elastic strand material, in addition to the Kraton D grade class of styrene butadiene styrene (SBS) resins such as those aforementioned, the Vector brand extrusion grade resins such as Vector 6240D (SBS), 6101D styrene isoprene styrene (SIS) and 6201D (SBS) are also preferred. Suitably the elastic strand material is a blend of SBS and SIS resins. Preferred blends are in the range of 50-70 parts SIS to 30-50 parts SBS.

Additional resins such as processing aid resins and slip agents may be added to the elastic strand material in small amounts, such as about 5-30 parts, to improve processability and to enhance physical properties of the elastic strand material. Improvement in processability is for example evidenced by the ability to draw down strands of the mixture. Physical properties enhanced include improved melt strength, and elastic properties such as stress relaxation, set and creep. These processing aid resins include isotatic polypropylene, polyethylene, amorphous polypropylene, polybutylene, ethylene/vinyl acetate copolymer, ethylene/ethyl acrylate copolymer, ethylene/methyl acrylate copolymer, ethylene/methyl acetate copolymer, polystyrene and the like. Preferred resins are polystyrene, polyethylene, polybutylene, polypropylene, ethlene vinyl acetate (EVA) and ethylene methyl acetate (EMA), and the most preferred resin is polystyrene. The relative parts ratios may vary.

Depending on the elastomeric blend used, a slip additive may also be added in an effective amount to prevent blocking, which occurs when the strands of net become tacky and stick to themselves as well as the web handling equipment. Examples of such slip additives are modified fatty acid esters or fatty acid amides.

The most preferred elastic strand material is a blend of SIS/SBS as set forth below:
- 60 parts: SIS
- 40 parts: SBS
- 25 parts: Processing Aid Resins

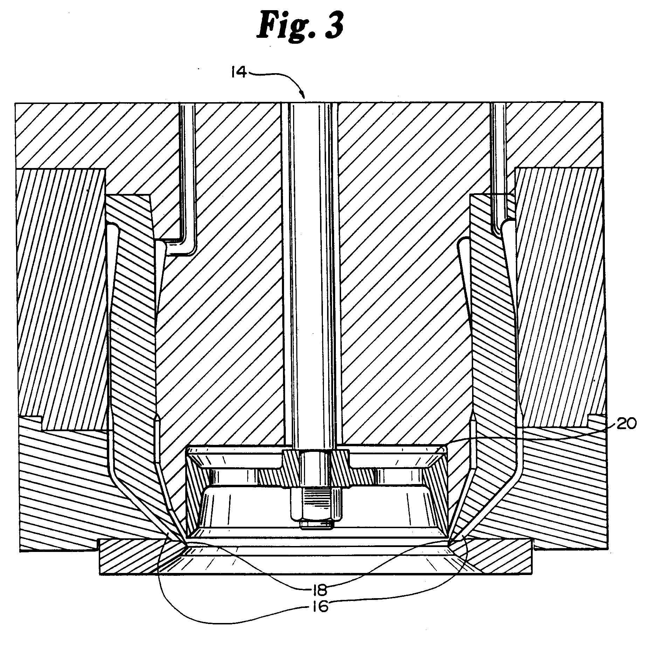

Referring now to FIG. 3, an extrusion die **14** is shown for forming the bicomponent netting product. The machine direction strands (MD) **10** are the non-elastic strands in this embodiment. In the most preferred embodiment, they are made of polypropylene, which is supplied to the die under pressure and which is discharged continuously from cavity **16** through a plurality of openings (not shown) to form the MD strands. The openings do not appear in the cross section shown in FIG. 3. The transverse direction strands (TD) **12** are formed of a relatively elastic styrenic block copolymer, such as a styrene-butadiene polymer. In the most preferred embodiment, an SIS/SBS blend is used. The elastomer is supplied to the die under pressure and intermittently discharged through slit **18** shown partially open in FIG. 3 which is opened and closed by the reciprocating movement of piston **20**. When piston **20** is moved to open slit **18** the elastomer flows out to form transverse TD strands **12** in the form of a closed ring intersecting with all of the MD strands. The netting is extruded in the form of a cylinder or tube, which is then cut lengthwise and flattened to form a continuous sheet. The non-elastic strands (MD in this embodiment) may optionally be oriented in a second processing step.

Since polyolefins and styrenic block copolymers, in combination a preferred embodiment, are two basically incompatible polymer groups, it was unexpected that the bond strength of netting strands made from these two materials would be well bonded at the joints. It is not obvious that netting strands made of two basically incompatible resin groups, such as polyolefins and styrenic block copolymers, can provide a good bond with the associated desirable properties. Differences in polymer compatibility, rheology, processing melt history, melt temperatures and the like contribute to the expectation of a poor strand to strand bond as compared to a situation in which one polymer component is used for the two melt streams.

A high bond strength is particularly required if the extruded bicomponent netting is oriented in a second processing step. In this process step, high forces are transferred and distributed through the netting joint to and from netting strands in all directions. Without a good strand to strand bond at the joint, the product will fail. The resulting product can consequently be made with uniform transverse direction strand spacing, high transverse direction strandcount, and is both uniaxially and biaxially orientable and extensible.

Advantages of the bicomponent elastomeric net of the present invention over all-elastomeric netting are many. For instance, the product may be designed with one set of properties in one direction, and another set of properties in the opposite direction. Specifically, high yield strength and dimensional stability is designed by using a nonelastic polymer such as polypropylene in one direction, while elastomeric properties are ensured by the use of an elastomer such as Kraton® in the opposite direction. The polypropylene/Kraton® combination also improves web handling and processing of an elastomeric product for the netting producer, the converter and the end user. Further, overall product cost may be reduced by using expensive elastomeric resins only where needed and inexpensive resins elsewhere, and by increasing product yield or product area per resin mass through orientation of the nonelastic, polypropylene segments. Similarly, elastomeric product width may be increased through orientation of the non-elastomeric segments.

This completes the description of the preferred and alternate embodiments of the invention. Those skilled in the art may recognize other equivalents to the specific embodiment described herein which equivalents are intended to be encompassed by the claims attached hereto.

## Claims

1. A bicomponent elastomeric extruded netting characterised in that said netting has unidirectional elasticity and comprises extruded strands (10) consisting essentially of an inelastic polyolefin resin extending in one direction and extruded strands (12) consisting essentially of an elastic styrenic block copolymer composition extending in a transverse direction.

2. A netting according to Claim 1, characterised in that said stands (10) of the polyolefin resin extend in the machine direction.

3. A netting according to Claim 1, characterised in that the extruded stands (12) of elastic composition extend in the machine direction.

4. A netting according to any one of Claims 1 to 3, characterised in that the said polyolefin is polypropylene.

5. A netting according to any one of Claims 1 to 4, characterised in that the said elastic composition is a styrene-butadiene-styrene resin.

6. A netting according to any one of Claims 1 to 4, characterised in that said elastic composition is a styrene-isoprene-styrene resin.

7. A netting according to any one of Claims 1 to 4, characterised in that said elastic composition is a blend of resins.

8. A netting according to any one of Claims 1 to 4, characterised in that said elastic compsition is a blend of SBS and SIS.

9. A netting according to Claim 8, characterised in that said elastic composition comprises about 50-70 parts SIS and about 30-50 parts SBS.

10. A netting according to any one of Claims 1 to 4, 8 and 9, characterised in that said elastic composition further includes a processing aid resin selected from the group consisting of isotatic polypropylene, polyethylene, amorphous polypropylene, polybutylene, ethylene/vinyl acetate copolymer, ethylene/ethyl acrylate copolymer, ethylene/methyl acrylate copolymer, ethylene/methyl acetate copolymer, polystyrene and mixtures thereof.

11. A netting according to Claim 10, characterised in that said elastic composition includes about 5-30 parts of the processing aid resin.

12. A netting according to Claim 11, characterised in that the parts are substantially 25.

13. A netting according to Claim 10, characterised in that said elastic composition includes from 5 to 30 parts of polystyrene.

14. A netting according to Claim 10, characterised in that said elastic composition includes an amount of a slip agent.

## Patentansprüche

1. Elastische, extrudierte Bikomponente-Netzware, dadurch gekennzeichnet, daß genannte Netzware in eine Richtung wirkende Elastizität aufweist und extrudierte Stränge (10), die im wesentlichen aus einem ineslastischem Polyolefinharz bestehen, das sich in eine Richtung erstreckt und extrudierte Stränge (12) umfaßt, die im wesentlichen aus einer elastischen Styrolblock-Coploymerzusammensetzung bestehen, die sich in Querrichtung erstrecken.

2. Netzware nach Anspruch 1, dadurch gekennzeichnet, daß sich genannte Stränge (10) des Polyolefinharzes in Maschinenlaufrichtung erstrecken.

3. Netzware nach Anspruch 1, dadurch gekennzeichnet, daß sich die extrudierten Stränge (12) elastischer Zusammensetzung in Maschinenlaufrichtung erstrecken.

4. Netzware nach einem der Ansprüche 1 bis 3, dadurch gekennzeichnet , daß das genannte Polyolefin Polypropylen ist.

5. Netzware nach einem der Ansprüche 1 bis 4, dadurch gekennzeichnet, daß die genannte elastische Zusammensetzung ein Styrol-Butadienstyrolharz ist.

6. Netzware nach einem der Ansprüche 1 bis 4, dadurch gekennzeichnet, daß genannte elastische Zusammensetzung ein Styrol-Isoprenstyrolharz ist.

7. Netzware nach einem der Ansprüche 1 bis 4, dadurch gekennzeichnet, daß genannte elastische Zusammensetzung eine Mischung von Harzen ist.

8. Netzware nach einem der Ansprüche 1 bis 4, dadurch gekennzeichnet, daß genannte elastische Zusammensetzung eine Mischung aus SBS und SIS ist.

9. Netzware nach Anspruch 8, dadurch gekennzeichnet, daß genannte elastische Zusammensetzung etwa 50-70 Teile SIS und etwa 30-50 Teile SBS umfaßt.

10. Netzware nach einem der Ansprüche 1 bis 4, 8 und 9 dadurch gekennzeichnet, daß genannte elastische Zusammensetzung weiter ein Verarbeitungshilfsmittelharz einschließt, das aus der Gruppe ausgewählt wird, die aus isotaktischem Polypropylen, Polyethylen, amorphem Polypropylen, Polybutylen, Ethylen-Vinylacetat-Copolymerisat, Ethylen-Ethylacrylat-Copolymerisat, Ethylen-Methylacrylat-Copolymerisat, Ethylen-Methylacetat-Copolymerisat, Polystyrol und Mischungen davon besteht.

11. Netzware nach Anspruch 10, dadurch gekennzeichnet, daß genannte elastische Zusammensetzung etwa 5-30 Teile des Verarbeitungshilfsmittelharzes einschließt.

12. Netzware nach Anspruch 11, dadurch gekennzeichnet, daß die Teile im wesentlichen 25 sind.

13. Netzware nach Anspruch 10, dadurch gekennzeichnet, daß genannte elastische Zusammensetzung von 5 bis 30 Teile Polystyrol einschließt.

14. Netzware nach Anspruch 10, dadurch gekennzeichnet, daß genannte elastische Zusammensetzung eine Menge eines Gleitmittels einschließt.

## Revendications

1. Un filet boudiné élastomérique à deux composants, **caractérisé en ce que** ce filet comporte des torons (10) boudinés consistant pour l'essentiel en une résine polyoléfine non-élastique s'étendant dans une direction et des torons (12) boudinés consistant pour l'essentiel en une composition de copolymère d'un bloc styrénique élastique s'étendant dans une direction transversale par rapport à la machine.

2. Un filet selon la revendication 1, **caractérisé en ce que** les torons (10) en résine polyoléfine s'étendent dans le sens de la machine.

3. Un filet selon la revendication 1, **caractérisé en ce que** les torons (12) boudinés de composition élastique s'étendent dans la direction de la machine.

4. Un filet selon l'une quelconque des revendications 1 à 3, **caractérisé en ce que** la polyoléfine est un polypropylène.

5. Un filet selon l'une quelconque des revendications 1 à 4, **caractérisé en ce que** la composition élastique est une résine de styrène-butadiène-styrène.

6. Un filet selon l'une quelconque des revendications 1 à 4. **caractérisé en ce que** la composition élastique est une résine de styrène-isoprène-styrène.

7. Un filet selon l'une quelconque des revendications 1 à 4, **caractérisé en ce que** la composition est un mélange de résines.

8. Un filet selon l'une quelconque des revendications 1 à 4, **caractérisé en ce que** la composition élastique est un mélange de styrène-butadiène-styrène et de styrène-isoprène-styrène.

9. Un filet selon la revendication 8, **caractérisé en ce que** la composition élastique comprend environ 50-70 parts de SIS et environ 30-50 parts de SBS.

10. Un filet selon l'une quelconque des revendications 1 à 4, 8 et 9, **caractérisé en ce que** la composition élastique comprend de surcroît une résine auxiliaire de traitement choisie dans un groupe de propylène isotactique, polyéthylène, polypropylène amorphe, polybutylène, éthylène/copolymère d'acétate de vinyl, éthylène/copolymère d'acrylate d'éthyl, éthylène/copolymère d'acétate de méthyl, polystyrène et mélanges de polystyrènes.

11. Un filet selon la revendication 10, **caractérisé en ce que** la composition élastique comprend environ 5-30 parts de la résine auxiliaire de traitement.

12. Un filet selon la revendication 11, **caractérisé en ce que** les parts sont substantiellement au nombre de 25.

13. Un filet selon la revendication 10, **caractérisé en ce que** la composition élastique comprend de 5 à 30 parts de polystyrène.

14. Un filet selon la revendication 10, **caractérisé en ce que** la composition élastique comprend une certaine quantité d'un agent de glissement.
